# EUROPÄISCHE PATENTSCHRIFT

(11) **EP 1 535 799 B1**
(45) Veröffentlichungstag und Bekanntmachung des Hinweises auf die Patenterteilung: **12.03.2008**
(21) Anmeldenummer: 04026051.5
(22) Anmeldetag: 03.11.2004
(51) Int. Cl.: B60Q 7/00

(54) **Warndreieck**
Warning triangle
Triangle de signalisation

(30) Priorität: 28.11.2003 DE 20318438 U
(43) Veröffentlichungstag der Anmeldung: 01.06.2005
(73) Patentinhaber: Leina-Werke GmbH, 51570 Windeck (DE)
(72) Erfinder: Steinhauer, Thorsten, 57539 Blitzen (DE)
(74) Vertreter: Herden, Andreas F.

(56) Entgegenhaltungen:
- EP-A- 0 864 464
- DE-A1- 1 816 912
- DE-U1- 20 001 925
- DE-U1- 20 007 407
- DE-U1- 20 219 312
- DE-U1- 29 813 803

## Beschreibung

Die Erfindung betrifft ein zusammenlegbares Warndreieck, welches besonders klein zusammenlegbar und sehr leicht ist.

Zusammenlegbare Warndreiecke sind bekannt. Warndreiecke dienen dazu um vor einer sich in der Nähe befindlichen Gefahr zu warnen. So finden Warndreiecke besonders im Straßenverkehr dann Verwendung, wenn ein Fahrzeug an einer Stelle liegenbleibt und der nachfolgende Verkehr gewarnt werden soll, dass sich dort ein Hindernis auf der Straße befindet.

Es bestehen teilweise gesetzliche Vorschriften hinsichtlich der Ausgestaltung von Warndreiecken. So ist vom Gesetzgeber her vielfach vorgeschrieben, welche Reflektoreigenschaften ein Warndreieck aufzuweisen hat, um im Straßenverkehr eingesetzt werden zu dürfen.

Auch für die Anwendung sollte ein Warndreieck bestimmte Eigenschaften aufweisen. Da jedes Fahrzeug ein Warndreieck mitführen sollte, sollte es daher möglichst klein zusammenklappbar sein um nach Möglichkeit günstig im Fahrzeug transportiert werden zu können. Des weiteren sollte der Aufbau sich einfach gestalten, damit im Notfall schnell ein Warndreieck aufgestellt werden kann. Vorzugsweise sollte das Warndreieck dabei noch möglichst leicht sein, aber dennoch stabil bei dessen Inbetriebnahme.

Die DE 298 13 803 U1 zeigt ein Warndreieck, bei welchem die Standfüße in einem ersten Schwenklager gehalten sind, welches über ein Schwenkteil schwenkbar im Basisteil des Warndreiecks gelagert ist.

Die EP 0 867 339 B1 beschreibt ein Warndreieck welches zu einem extrem kleinen Paket zusammenfaltbar ist. Dabei werden die Schwenkachsen des ersten Paares von Ständern aufeinanderfolgend so angeordnet, dass sie sich in einer Ebene befinden, welche im wesentlichen parallel zu der Ebene liegt, die durch den plattenartigen Rahmen gebildet wird. Ebenso werden die zweiten Paare von Ständern derart angeordnet, dass sie sich in einer Ebene befinden, die im wesentlichen parallel zu der Ebene liegt, die den plattenartigen Rahmen bildet.

Hierbei ist jedoch der plattenartige Rahmen aus Metall nachteilig, was zu einer deutlichen Zunahme des Gewichtes des Warndreiecks führt.

Es ist daher Aufgabe der Erfindung, ein Warndreieck bereitzustellen, welches sich sehr klein zusammenklappen läßt, einfach im Aufbau ist und zudem ein geringes Gewicht aufweist.

Diese Aufgabe wird bereits in höchst überraschender Weise durch ein zusammenklappbares Warndreieck gemäß der Ansprüche 1 bis 11 gelöst.

Bevorzugte Ausführungsformen und Weiterentwicklungen der Erfindung sind den jeweiligen Unteransprüchen zu entnehmen.

So enthält das erfindungsgemäße Warndreieck ein Basisschenkel, an dem randseitig zwei Seitenschenkel beweglich angeordnet sind. Die beiden Seitenschenkel und der Basisschenkel weisen reflektierende Oberflächen auf. Weiterhin verfügt das Warndreieck über zwei Ständerpaare.

Enden Gelenkausbildungen auf, die unmittelbar mit den Enden des Basisschenkels verbunden sind. Die Erfinder haben herausgefunden, dass es von Vorteil ist, wenn die Ständer direkt mit dem Basisschenkel des Warndreiecks verbunden sind. Hierdurch ist es möglich, auf zum Beispiel eine extra am Basisschenkel angebrachte Halterung zu verzichten und somit das Gewicht des Warndreiecks deutlich zu reduzieren.

In einer vorteilhaften Ausgestaltungsform weist das Warndreieck an den jeweiligen Gelenkausbildungen ein erstes Schwenklager auf. Dies bewirkt, dass die Gelenkausbildungen um die jeweiligen Enden des Basisschenkels horizontal bewegbar sind. Die Ständerpaare können so einfach eingeklappt und in ihre Betriebsposition ausgeklappt werden. Dadurch wird ein einfaches Aufstellen des Warndreiecks ermöglicht.

In einer bevorzugten Weiterbildung der Erfindung weist das Warndreieck an jeder Gelenkausbildung ein zweites Schwenklager zur Spreitzung der Elemente des jeweiligen Ständerpaares auf. Als Elemente werden die Ständer eines jeweiligen Ständerpaares bezeichnet. Es hat sich gezeigt, dass hierdurch die Ständerpaare derart in eine Position gebracht werden können, die eine besonders hohe Stabilität des Warndreiecks gegenüber äußere Einwirkungen bewirkt. Das Warndreieck erfüllt dadurch die gesetzlich vorgeschriebenen Bestimmungen hinsichtlich der Stabilität bei Betriebnahme. Dennoch ermöglicht diese Gelenkausbildung, dass das Warndreieck auf eine einfache Art aufgestellt werden kann, ohne zusätzliche komplizierte Mechanismen.

Es hat sich gezeigt, dass es von Vorteil ist, wenn die Gelenkausbildungen aus einem kunststoffarigen Material bestehen. Zu einem reduziert sich durch die Wahl eines solchen Materials das Gewicht des Warndreiecks, und zum anderen sind derartige Materialien besonders günstig.

Erfindungsgemäß sind die Elemente der Ständerpaare im zusammengeklappten Zustand an der Unterseite des Basisschenkels und befinden sich parallel zueinander. Durch eine derartige Stellung der Ständerpaare im zusammengeklappten Zustand kann das Warndreieck besonders klein zusammengeklappt werden und erweist sich somit praktisch für den Transport.

Erfindungsgemäß ist es von Vorteil, wenn das Material der Elemente der Ständerpaares aus Metallstangen besteht. Dadurch wird gewährleistet, dass die Ständerpaare die Last des Warndreiecks tragen können und genügend Stabilität im aufgestellten Zustand liefern.

Hierbei ist es wiederum von Vorteil, wenn die einzelnen Elemente des Ständerpaare eine im wesentlichen zylindrische Form aufweisen mit einen Durchmesser von 0,1 mm - 2 cm, insbesondere 0,5 mm - 1 cm. Diese Stangengrößen werden heute vielfältig hergestellt und sind daher ein Massenprodukt, was bedeutet, dass sie günstig in der Anschaffung sind. Des weiteren trägt diese Größe der Elemente der Ständerpaare dazu bei, dass das Warndreieck nicht zu schwer wird.

Gemäß der Erfindung entspricht die Länge der Elemente des Ständerpaares in etwa der Länge des Basisschenkels. Es hat sich gezeigt, das diese Länge sowohl vorteilhaft für die Standfestigkeit des Warndreiecks im aufgestellten Zustand ist. Ebenso wird hierdurch ermöglicht, dass das Warndreieck besonders günstig zusammengeklappt werden kann.

Das erfindungsgemäße Warndreieck weist somit kein Bestandteil auf, das länger als der Basisschenkel ist und ermöglicht somit eine die Möglichkeit das Warndreieck kompakt zusammenzufalten.

Es hat sich als vorteilhaft erwiesen, wenn unten am Basisschenkels eine Halterung für die beiden Ständerpaare angebracht ist. Hierbei ist es wiederum von Vorteil, wenn diese Halterung in etwa auf der Mitte der Unterseite angebracht ist. In diese Halterung können die beiden Ständerpaare eingeklippst werden. Es hat sich gezeigt, dass diese Ausführungsform besonders günstig ist, da so die Ständerpaare in eine fixe Form gebracht werden können, was wiederum besonders günstig ist, wenn man das Warndreieck in einer Hülle verstauen möchte. Hierdurch wird ein einfaches Verpacken gewährleistet, sowie eine einfache Handhabung des Warndreiecks, da die Ständer fixiert sind, was besonders beim Transport ohne eine Hülle von Vorteil ist.

Das erfindungsgemäße Warndreieck ist derart gestaltet, dass die beiden Seitenschenkel an ihren freien Enden miteinander lösbar verbindbar sind. Die beiden Seitenschenkel können jeweils an ihrem freien Ende miteinander verbunden werden, sofern das Warndreieck aufgestellt werden soll. Ansonsten ermöglicht diese Ausführungsform, dass das Warndreieck möglichst klein zusammengefaltet und somit platzsparend aufbewahrt werden kann und somit ebenfalls handlich beim Transport ist.

Zur zusätzlichen Warnung vor Hindernissen im aufgestellten Zustand sieht eine bevorzugte Ausführungsform des Warndreiecks vor, dass eine faltbare flächige Folienstruktur an den beiden Seitenschenkeln sowie dem Basisschenkel befestigt wird, welche sich im aufgeklappten Zustand im Inneren der Fläche des Warndreiecks befindet. Hierdurch wird gewährleistet dass das Warndreieck im Notfall noch besser gesehen wird und somit zu einer Erhöhung der Sicherheit beiträgt. Da die flächige Struktur im Inneren des Dreiecks aus einem folienartigen Material herstellbar ist, ist sie besonders haltbar. Dennoch ist das Material einfach zusammenfaltbar und weist ein geringes Gewicht auf.

Das erfindungsgemäße Warndreieck weist ein Gewicht von unter 700 Gramm auf. Es hat sich gezeigt, dass durch dieses geringe Gewicht und durch die Möglichkeit das Warndreieck besonders klein zusammenzufalten, das erfindungsgemäße Warndreieck besonders handlich sowie leicht aufzustellen ist und dennoch den Anforderungen an ein Warndreieck gerecht wird.

Die Erfindung wird nun im folgenden durch das Beschreiben einiger Ausführungsformen unter Bezugnahme auf die beiliegenden Zeichnungen näher erläutert, wobei
- Fig. 1: ein Ausführungsbeispiel eines erfindungsgemäßen Warndreiecks im aufgestellten Zustand mit Blick auf die reflektierende Seite in Gesamtdarstellung zeigt
und
- Fig. 2: eine Detailansicht mit der dort vorhandenen Gelenkausbildung zeigt
und
- Fig. 3: eine Seitenansicht eines erfindungsgemäßen Warndreiecks zeigt.

### Ausführungsbeispiel:

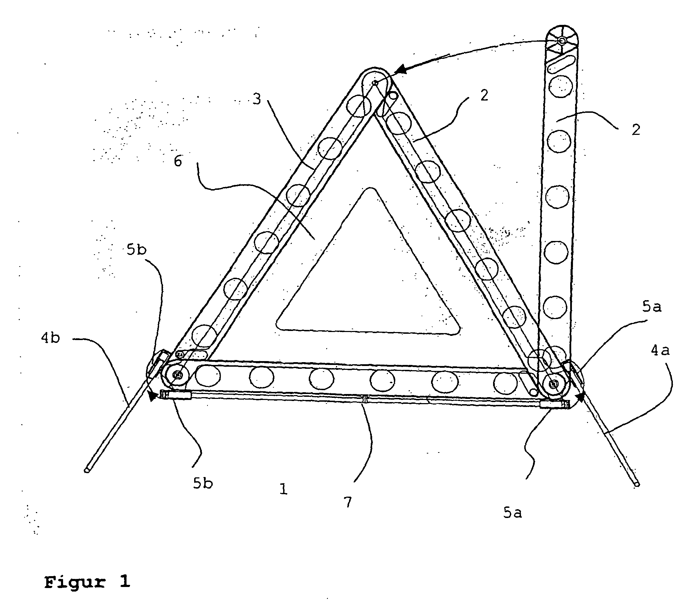

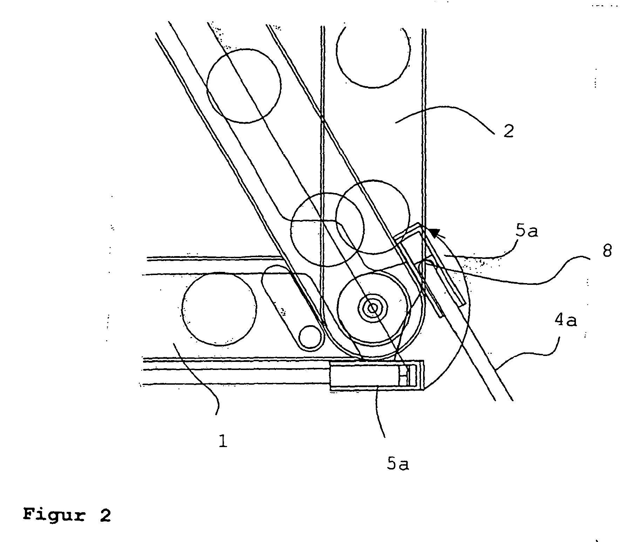

Figur 1 zeigt eine Ausführungsform des erfindungsgemäßen Warndreiecks. Es umfasst ein Basisschenkel 1, an dessen Enden zwei Seitenschenkel 2, 3 drehbar befestigt sind. Ferner ist an den beiden Enden des Basisschenkels 1 jeweils eine Gelenkausbildung 5a, 5b angebracht, die in Figur 2 besser sichtbar dargestellt sind. Die Gelenkausbildungen 5a, 5b sind unmittelbar mit dem Basisschenkel 1 und den daran befestigten Seitenschenkeln 2, 3 derart verbunden, dass sie sich um die jeweiligen Enden drehen lassen. Die Gelenkausbildungen 5a, 5b verfügen über ein Schwenklager, die es ermöglichen die Elemente, also die einzelnen Ständer der Ständerpaare 4a, 4b zu spreizen.

Die beiden Seitenschenkel 2, 3 sind benachbart zu deren freien Ende miteinander lösbar verbindbar. Zur Verdeutlichung ist in Figur 1 das Seitenschenkel 2 doppelt dargestellt; einmal im komplett montierten Zustand, also im Betriebszustand, und einmal in einem Zustand, bei welchem das Seitenschenkel 2 noch nicht dem Seitenschenkel 3 verbunden ist. Zum Verbinden werden die beiden Seitenschenkel 2, 3 an ihrem mit dem Basisschenkel 1 verbundenen Ende soweit gedreht, bis sie sich überschneiden und miteinander verbunden werden können.

In Figur 2 ist die erfindungsgemäße Ausführungsform einer Verbindung des Basisschenkels 1 mit einem Seitenschenkel 2, 3 und einer Gelenkausbildung 5a, 5b dargestellt. Dabei sind der Basisschenkel 1 und ein Seitenschenkel 2 derart miteinander verbunden, dass das Seitenschenkel 2 drehbar ist, aber nicht lösbar. Die Verbindung erfolgt mittels einer Niete an welcher gleichzeitig auch eine Halterung für die jeweiligen Gelenkausbildungen 5a derart angebracht ist, dass diese um die Niete herum drehbar ist. Die Gelenkausbildung 5a besteht im wesentlichen aus Kunststoff und weist die weitere Gelenkausbildung 8 auf, die zur Spreitzung der Ständerpaare 4a dient.

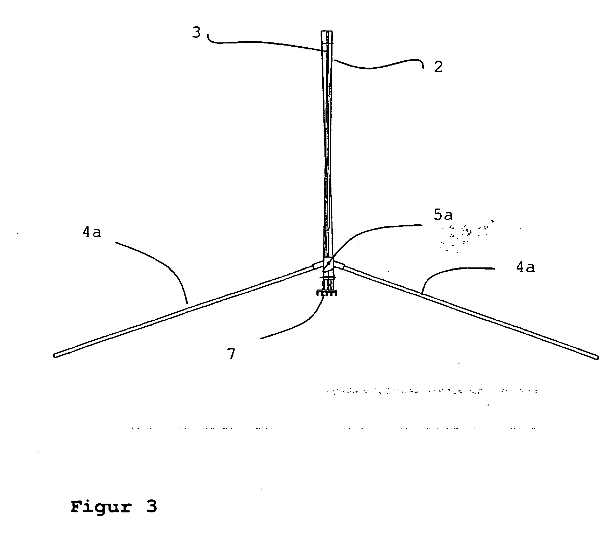

In Figur 3 ist ein erfindungegemäßes Warndreieck von der Seite dargestellt. Dabei befinden sich die Ständer eines Ständerpaare 4a, 4b im gespreizten Zustand, wie es der Fall ist, wenn das Warndreieck aufgestellt ist. Dabei werden die Ständerpaare 4a, 4b durch ein Schwenklager innerhalb der Gelenkausbildung 5a, 5b gespreizt. In Figur 3 ist auch die Halterung 7 deutlich von der Seite zu erkennen, in die die einzelnen Ständer der Ständerpaare 4a, 4b eingeklippst werden können. Hierzu weist die Halterung 7 für jeden Ständer eine eigene Vertiefung auf, die den Ständer aufnimmt. Die Halterung umfaßt demnach vier Aussparungen die durch ihre spezielle Form es ermöglichen, dass die Ständer formschlüssig fixiert werden können. Die Halterung 7 befindet sich direkt an der Unterseite des Basisschenkels 1 und ist aus dem selben Material wie der Basisschenkel 1 herstellbar.

Je nach Bedarf kann das Warndreieck eine faltbare flächige Struktur 6 umfassen, welche eine zusätzliche Warnfunktion ausüben kann. Die flächige faltbare Struktur 6 ist vorteilhafterweise an den Enden der Seitenschenkel 2,3 und des Basisschenkels 1 befestigt und aus einem Material gefertigt, das vorzugsweise eine widerstandsfähige Kunststoff-Folie ist.

Der Basisschenkel 1, sowie die Seitenschenkel 2, 3 weisen eine Länge von etwa 40 cm auf, wobei es von Bedeutung ist, dass alle 3 Teile die gleiche Länge haben. Die Ständer der Ständerpaare 4a, 4b haben ebenfalls eine Länge von etwa 40 cm. Die Breite der Seitenschenkel 2, 3 sowie der Basisschenkels 1 sind erfindungsgemäß 4,5 cm breit. Als bevorzugtes Material für die Seitenschenkel 2, 3 und der Basisschenkel 1 eignet sich Kunstoff, wobei es auch möglich ist, ein derartiges Warndreieck auch mit anderen Materialien herzustellen. Die Ständer der Ständerpaare 4a, 4b sind bevorzugt aus Metall hergestellt und weisen einen Durchmesser von 0,5 cm auf.

Diese Materialien ermöglichen, dass das Warndreieck ein Gesamtgewicht von unter 700 Gramm hat.

Um das Warndreieck aufzustellen, werden die beiden Ständerpaare 4a, 4b in der jeweiligen Gelenkausbildung 5a, 5b, welche im zusammengeklappten Zustand mittels einer Halterung 7 am unteren Ende des Basisschenkels 1 befestigt sind, zuerst aus der Halterung 7 herausgeklippt und dann um das Ende des Basisschenkels 1 herumgeschwenkt. Es erfolgt nun die Spreitzung der Ständerpaare 4a, 4b. Hierzu weist jede Gelenkausbildung 5a, 5b, wie bereits oben beschrieben, ein Schwenklager auf, welches es ermöglicht die Ständerpaare 4a, 4b derart zu spreitzen, so dass die einzelnen Ständer eines Ständerpaares 4a, 4b einen Winkel von etwa 90° - 170° bilden. Die Länge der jeweiligen Ständerpaare 4a, 4b entspricht der Länge des Basisschenkels

## Patentansprüche

1. Zusammenlegbares Warndreieck umfassend:
ein Basisschenkel(1), an dem randseitig
zwei Seitenschenkel (2, 3) beweglich angeordnet sind,
wobei die beiden Seitenschenkel (2, 3) und der Basisschenkel (1) eine reflektierende Oberfläche aufweisen, und
zwei Ständerpaare (4a, 4b),
und wobei der Basisschenkel (1) an seinen Enden Gelenkausbildungen (5a, 5b) für die Ständerpaare (4a, 4b) aufweist,
jede Gelenkausbildung (5a, 5b) ein erstes Schwenklager aufweist, so dass die Gelenkausbildungen (5a, 5b) um die Enden des jeweiligen Basisschenkels (1) horizontal bei flach liegendem Warndreieck schwenkbar sind,
jede Gelenkausbildung (5a, 5b) ein zweites Schwenklager (8) zur Spreitzung der Elemente des jeweiligen Ständerpaares (4a, 4b) aufweist,
wobei aus einer Stellung des Warndreiecks im aufgestellten Zustand
die Elemente der Ständerpaare (4a, 4b) zunächst zusammenlegbar sind und dann zusammen mit den Gelenkausbildungen um das Ende des Basisschenkels (1) herum schwenkbar sind, so dass
die Elemente der Ständerpaare (4a, 4b) sich im zusammengeklappten Zustand an der Unterseite des Basisschenkels (1) befinden und parallel zueinander verlaufen,
**dadurch gekennzeichnet, dass** im aufgestelltem Zustand des Warndreiecks die jeweilige Gelenkausbildung (5a, 5b) an ihrem zugehörigen Seitenschenkel (2, 3) anliegt, und dass die im zusammengeklappten Zustand an der Unterseite des Basisschenkels befindlichen Elemente der Ständerpaare (4a, 4b) in einer Draufsicht auf die reflektierende Oberfläche hintereinander angeordnet sind.

2. Zusammenlegbares Warndreieck nach einem der vorhergehenden Ansprüche, **dadurch gekennzeichnet, dass** die Gelenkausbildungen (5a, 5b) aus einem kunstoffartigen Material bestehen.

3. Zusammenlegbares Warndreieck nach einem der vorhergehenden Ansprüche, **dadurch gekennzeichnet, dass** die Elemente der Ständerpaares (4a, 4b) aus Metallstangen bestehen.

4. Zusammenlegbares Warndreieck nach einem der vorhergehenden Ansprüche, **dadurch gekennzeichnet, dass** die Elemente des Ständerpaares (4a, 4b) in etwa die gleiche Länge wie der Basisschenkel (1) haben.

5. Zusammenlegbares Warndreieck nach Anspruch 3, **dadurch gekennzeichnet, dass** die Elemente des Ständerpaares (4a, 4b) (4a, 4b) eine im wesentlichen zylindrische Form aufweisen.

6. Zusammenlegbares Warndreieck nach Anspruch 5, **dadurch gekennzeichnet, dass** die Elemente des Ständerpaares (4a, 4b) einen Durchmesser von 0,1 mm - 2 cm, insbesondere 0,2 mm - 1 cm aufweisen.

7. Zusammenlegbares Warndreieck nach einem der vorhergehenden Ansprüche, **dadurch gekennzeichnet, dass** sich unten am Basisschenkel (1) in etwa in der Mitte, eine Halterung (7) für die beiden Ständerpaare (4a, 4b) angebracht befindet.

8. Zusammenlegbares Warndreieck nach einem der vorhergehenden Ansprüche, **dadurch gekennzeichnet, dass** die Ständerpaare (4a, 4b) in der Halterung (7) einklippbar sind.

9. Zusammenlegbares Warndreieck nach einem der vorhergehenden Ansprüche, **dadurch gekennzeichnet, dass** die beiden Seitenschenkel (2, 3) an ihren freien Enden miteinander lösbar verbindbar sind.

10. Zusammenlegbares Warndreieck nach einem der vorhergehenden Ansprüche, **dadurch gekennzeichnet, dass** eine faltbare flächige Folienstruktur (6) an den beiden Seitenschenkeln (2, 3) sowie dem Basisschenkel (1) befestigt ist und sich im aufgeklappten Zustand im Inneren der Fläche des Warndreiecks befindet.

11. Zusammenlegbares Warndreieck nach einem der vorhergehenden Ansprüche, **dadurch gekennzeichnet, dass** das Warndreieck ein Gewicht von unter 700 Gramm aufweist.

## Claims

1. Collapsible warning triangle, comprising
a base leg (1), at the edge of which two side legs (2, 3) are movably arranged, wherein the two side legs (2, 3) and the base leg (1) are provided with a reflecting surface, and two support pairs (4a, 4b),
and wherein the base leg (1) is provided at its ends with joint constructions (5a, 5b) for the support pairs (4a, 4b), each joint construction (5a, 5b) comprises a first pivot bearing, so that the joint constructions (5a, 5b) are horizontally rotatable around the ends of the respective base leg (1) with the warning triangle in a flat lying position, each joint construction (5a, 5b) comprises a second pivot bearing (8) for spreading the components of the respective support pair (4a, 4b),
wherein from a setting of the warning triangle in an erected condition
the components of the support pairs (4a, 4b) are firstly collapsible and then, together with the joint constructions, rotatable around the end of the base leg (1), so that in the collapsed condition the components of the support pairs (4a, 4b) are arranged at the bottom side of the base leg (1) and run parallel to each other,
**characterized in that** in the erected condition of the warning triangle the respective joint construction (5a, 5b) abuts its associated side leg (2, 3), and that the components of the support pairs (4a, 4b), in the collapsed condition arranged at the bottom side of the base leg, are arranged one after another in a top view onto the reflecting surface.

2. Collapsible warning triangle of any one of the preceding claims, **characterized in that** the joint constructions (5a, 5b) consist of a plastic-like material.

3. Collapsible warning triangle of any one of the preceding claims, **characterized in that** the components of the support pairs (4a, 4b) are provided as metallic rods.

4. Collapsible warning triangle of any one of the preceding claims, **characterized in that** the components of the support pairs (4a, 4b) and the base leg (1) approximately have the same length.

5. Collapsible warning triangle of claim 3, **characterized in that** the components of the support pairs (4a, 4b) essentially have a cylindrical form.

6. Collapsible warning triangle of claim 5, **characterized in that** the components of the support pairs (4a, 4b) have a diameter between 0.1 mm and 2 cm, in particular between 0.2 mm and 1 cm.

7. Collapsible warning triangle of any one of the preceding claims, **characterized in that** a mounting (7) for the two support pairs (4a, 4b) is provided, which is attached at the bottom of the base leg (1) approximately in the middle.

8. Collapsible warning triangle of any one of the preceding claims, **characterized in that** the support pairs (4a, 4b) are clipable into the mounting (7).

9. Collapsible warning triangle of any one of the preceding claims, **characterized in that** the two side legs (2, 3) are detachably connectable at its free ends.

10. Collapsible warning triangle of any one of the preceding claims, **characterized in that** a foldable 2-dimensional foil structure (6) is attached to the two side legs (2, 3) and the to the base leg (1) which in the unfolded condition is arranged within the face of the warning triangle.

11. Collapsible warning triangle of any one of the preceding claims, **characterized in that** the weight of the warning triangle is below 700 gram.

## Revendications

1. Triangle de signalisation pliable comprenant:
un côté d'un angle de base (1) à qui une paire de côtés latérales (2,3) sont placés mobiles, la paire de côtés latérales (2,3) et le côté de base (1) comprenants une surface réfléchissante, et
deux paires de montants (4a, 4b), le côté de base (1) comprenant des assemblages articulés (5a, 5b) à ses extrémités pour les paires de montants (4a, 4b),
chaque assemblage articulé (5a, 5b) comprenant un premier palier pivotant afin que les assemblages articulés (5a, 5b) soient pivotants de manière horizontale en cas de triangle de signalisation se trouvant planement,
chaque assemblage articulé (5a, 5b) comprenant un deuxième palier pivotant (8) pour écarter les éléments de chaque paire de montants (4a, 4b),
les éléments des paires de montants (4a, 4b), à partir d'une position du triangle du signalisation à état debout, sont en premier lieu pliables et alors, en compagnie avec les assemblages articulés, sont pivotants autour de l'extrémité du côté de base (1), ainsi que les éléments des paires de montants (4a, 4b) se trouvent à la face inférieure du côté de base (1) et s'étendront parallèlement en état plié,
**caractérisé en ce que** chaque assemblage articulés (5a, 5b) est adjacent à son côté latérale (2, 3) correspondant à l'état debout, et
**en ce que** les éléments des montants (4a, 64b), qui se trouvent à la face inférieure du côté de base, sont placés l'un après l'autre dans une vue sur la surfaces réfléchissante.

2. Triangle des signalisation pliable selon l'une quelconque des revendications précédentes,
**caractérisé en ce que** les assemblages articulés (5a, 5b) consistent d'une matériel de synthétique.

3. Triangle des signalisation pliable selon l'une quelconque des revendications précédentes,
**caractérisé en ce que** les éléments des paires de montants (4a, 4b) consisteant de barre de métal.

4. Triangle des signalisation pliable selon l'une quelconque des revendications précédentes,
**caractérisé en ce que** les éléments des paires de montants (4a, 4b) ont à peu près la même longueur que le côté de base (1).

5. Triangle des signalisation pliable selon revendication 3,
**caractérisé en ce que** les éléments des paires de montants (4a, 4b) présentent une forme essentiellement cylindrique.

6. Triangle des signalisation pliable selon revendication 5,
**caractérisé en ce que** les éléments des paires de montants (4a, 4b) présentent une diamètre de 0,1 mm à 2 cm, particulièrement 0,2 mm à 1 cm.

7. Triangle des signalisation pliable selon l'une quelconque des revendications précédentes,
**caractérisé en ce que** les une console (7) se trouve en bas, auprès du côté de base (1) à peu près de son centre, pour les deux paires de montants (4a,4b).

8. Triangle des signalisation pliable selon l'une quelconque des revendications précédentes,
**caractérisé en ce que** les paires des montants (4a, 4b) sont encliquetables dans la console (7).

9. Triangle des signalisation pliable selon l'une quelconque des revendications précédentes,
**caractérisé en ce que** les deux côtés latérales (2, 3) sont connectables à leur extrémités libres de manière détachable.

10. Triangle des signalisation pliable selon l'une quelconque des revendications précédentes,
**caractérisé en ce que** une structure de feuille pliable (6) est fixée au paire de côtes latérales (2, 3) ainsi au côté de base (1) et se trouve dans l'intérieur de plan du triangle de signalisation en état debout.

11. Triangle des signalisation pliable selon l'une quelconque des revendications précédentes,
**caractérisé en ce que** le poids du triangle est au desous 700 grammes.
